# DEMANDE DE BREVET EUROPEEN

(11) **EP 2 804 135 A1**
(43) Date de publication de la demande: **19.11.2014**
(21) Numéro de dépôt: 14168284.9
(22) Date de dépôt: 14.05.2014
(51) Int. Cl.: G06Q 10/00, G06F 3/048

(54) **Personnalisation d'une interface de messagerie**

(30) Priorité: 16.05.2013 FR 1354415
(71) Demandeur: Streamwide, 75010 Paris (FR)
(72) Inventeur: BEGLIN, Pascal, 75007 PARIS (FR)
(74) Mandataire: Cabinet Plasseraud

(57) **Abrégé**

La présente invention propose la gestion d'une interface homme machine d'une application de messagerie auprès d'un terminal récepteur d'un message issu d'un premier utilisateur (A), selon les étapes :
a) Sélection par le premier utilisateur d'éléments d'interface homme machine,
b) Transmission (S4) à destination du terminal récepteur (TERB) d'au moins une information relative aux éléments d'interface sélectionnés, et
c) Sur réception (S7) d'un message issu du premier utilisateur auprès du terminal récepteur, affichage du message avec lesdits éléments d'interface.

## Description

La présente invention concerne une personnalisation dynamique d'interface homme-machine, notamment mais non exclusivement dans le domaine de la messagerie instantanée (ou « chat »).

La personnalisation d'interface utilisateur est un élément important pour assurer leur attractivité dans tout type d'applications (applications informatiques sur ordinateur personnel, interfaces web, applications clientes sur téléphones mobiles, etc.).

Toutes ces interfaces peuvent être personnalisées par les utilisateurs à travers des jeux de paramètres que l'utilisateur fait varier.

Par exemple, l'application Microsoft Word permet de personnaliser son interface à travers le menu « Word Options ». De même, l'interface web personnalisable de Google : « iGoogle » permet de personnaliser le contenu de la page en choisissant les rubriques (gadgets) parmi une liste et le type d'information que l'utilisateur souhaite voir figurer, ou en changeant le thème de l'interface. Dans ce dernier cas, on permet à l'utilisateur de choisir des thèmes coordonnés ou bien d'importer des éléments de contenu qu'il a conçus lui-même (comme par exemple des photos). On appelle aussi ces thèmes des « skins » (peau en anglais) et ce type de personnalisation le « skinning ». On permet à l'interface de « changer de peau ».

Enfin, certaines formes de personnalisation sont « poussées » (imposées en mode dit « push ») par l'éditeur de l'interface. Ce sont par exemple les espaces publicitaires sur les applications mobiles ou les pages web. Cette personnalisation tient au fait que ces publicités sont ciblées en fonction des informations recueillies sur l'utilisateur de l'interface par son éditeur.

Toutefois, dans ces techniques de personnalisation d'interface, connues, les seuls intervenants capables d'imposer une forme d'interface sont limités à :
- son utilisateur direct (appelé « entité B » ci-après), et/ou
- son éditeur.

La présente invention vient améliorer la situation.

Elle propose à cet effet un procédé de gestion d'une interface homme machine d'une application de messagerie auprès d'un terminal récepteur d'un message issu d'un premier utilisateur, le procédé comportant les étapes :
a) Sélection par le premier utilisateur d'éléments d'interface homme machine,
b) Transmission à destination du terminal récepteur d'au moins une information relative aux éléments d'interface sélectionnés, et
c) Sur réception d'un message issu du premier utilisateur auprès du terminal récepteur, affichage du message avec lesdits éléments d'interface.

Ainsi, l'invention permet de laisser d'autres acteurs personnaliser l'interface homme machine du terminal récepteur d'un message (l'entité B précitée). Les personnes (émettrices de messages) interagissant avec l'entité B à travers l'interface peuvent, dans le cadre de cette interaction, personnaliser l'interface de l'entité B dynamiquement pour refléter leur propre personnalité, leurs centres d'intérêt et/ou être identifiées de façon immédiate.

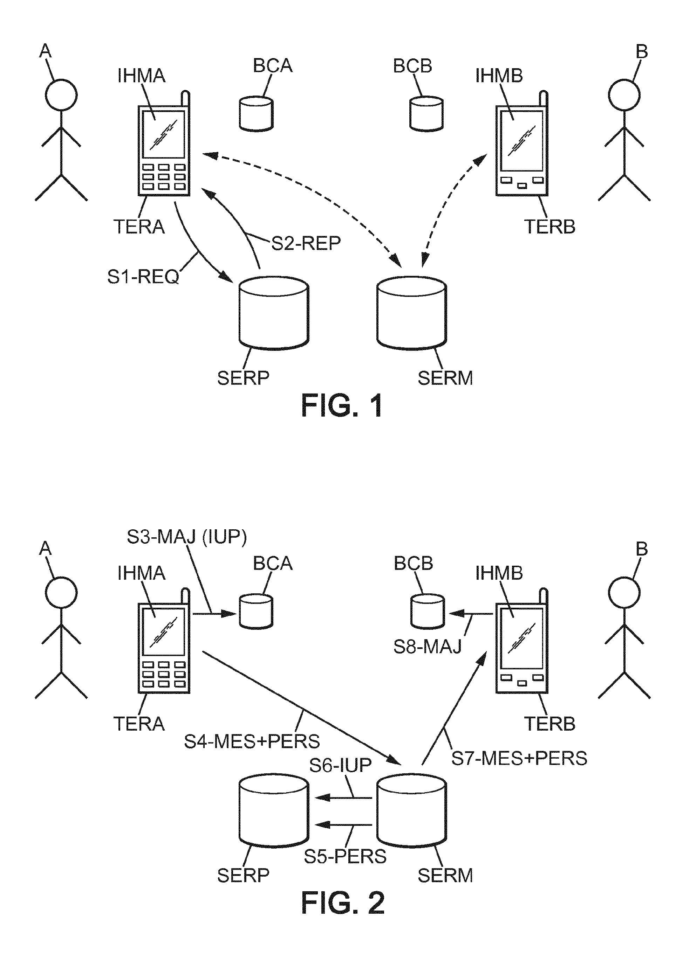

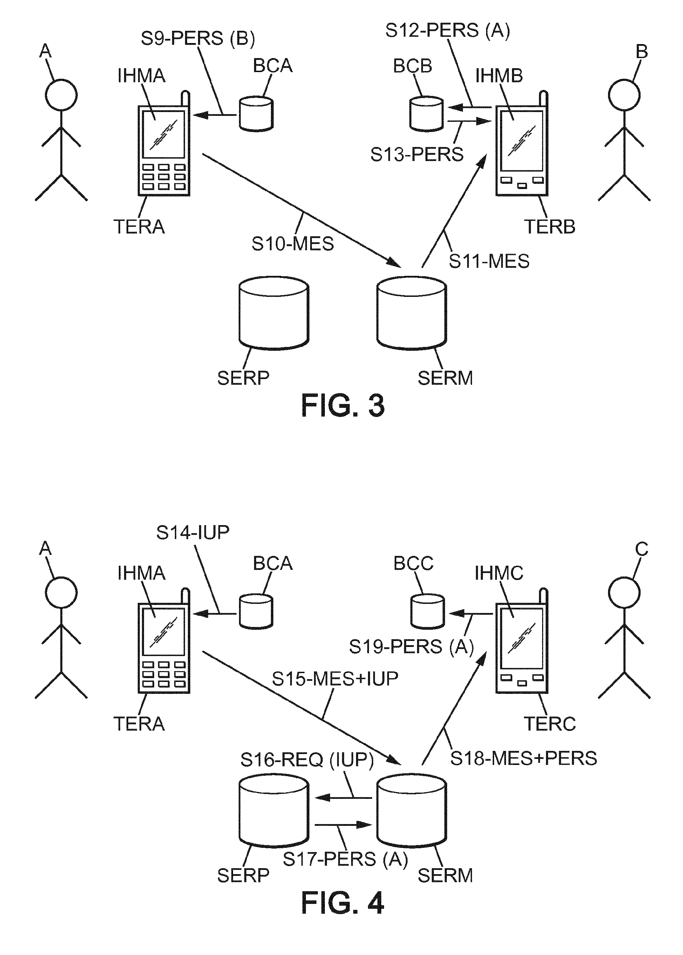

On entend par « *information relative aux éléments d'interface sélectionnés* » :
- les éléments d'interface, eux-mêmes, comme on le verra dans un exemple de réalisation décrit ci-après en référence à la figure 2, ou
- un identifiant unique de personnalisation, permettant de retrouver ces éléments d'interface auprès d'un serveur dédié, comme on le verra dans un exemple de réalisation décrit ci-après en référence à la figure 4, ou encore
- une simple coordonnée de contact du premier utilisateur précité (émetteur du message initial), si le terminal récepteur a déjà stocké les éléments d'interface précités, comme on le verra dans un exemple de réalisation décrit ci-après en référence à la figure 3.

On entend par « *éléments d'interface* » au moins un élément parmi :
- une couleur d'affichage de caractères du message,
- une fonte d'affichage de caractères du message,
- une couleur de fond d'affichage du message,
- un ou plusieurs contenus multimédias (formant par exemple un affichage publicitaire ou autre),
- un ou plusieurs contenus multimédias propres au premier utilisateur (par exemple des contenus personnels).

Bien entendu, le procédé peut comporter une étape dans laquelle un utilisateur du terminal récepteur peut valider ou non l'application des éléments d'interface précités pour l'affichage du message issu du premier utilisateur, par exemple via une interface homme machine du terminal récepteur.

Dans un mode de réalisation, une première mise en oeuvre de l'étape b) ci-avant comporte :
b1) une opération de transmission des éléments d'interface, pour un stockage desdits éléments d'interface en correspondance d'au moins un identifiant.

Dans une réalisation particulière, les éléments d'interface transmis à l'opération b1) sont reçus par le terminal récepteur avec un message issu du premier utilisateur et les éléments d'interface sont stockés auprès du terminal récepteur en correspondance d'au moins un identifiant du premier utilisateur que comporte le message.

Par exemple, l'identifiant du premier utilisateur peut être un identifiant d'une base de données de contact que stocke le terminal récepteur.

Ainsi, dans cette réalisation, sur réception de messages ultérieurs comportant l'identifiant du premier utilisateur, après l'opération b1), le terminal récepteur peut récupérer les éléments d'interface stockés en fonction de l'identifiant du premier utilisateur que comportent les messages ultérieurs, et afficher ces messages ultérieurs avec les éléments d'interface préalablement stockés.

Par ailleurs, les éléments d'interface peuvent être stockés en outre auprès d'un terminal du premier utilisateur en correspondance d'au moins un identifiant d'utilisateur du terminal récepteur, et ainsi, pour des messages ultérieurs destinés au terminal récepteur, le terminal du premier utilisateur peut transmettre ces messages ultérieurs sans avoir à transmettre d'élément d'interface, ni d'identifiant correspondant.

En complément ou en variante de la réalisation particulière précitée, les éléments d'interface, transmis à l'opération b1), peuvent être stockés auprès d'un serveur en correspondance d'au moins un identifiant.

Dans cette réalisation, le serveur précité peut être un serveur de personnalisation d'éléments d'interface et l'identifiant peut être un identifiant unique de personnalisation, propre à une forme d'interface donnée.

Dans une réalisation où un serveur de messagerie est prévu pour relayer des messages entre le premier utilisateur et un ou plusieurs destinataires de ces messages, le procédé peu alors comporter les étapes :
- sur réception d'un message donné, issu du premier utilisateur avec un identifiant unique de personnalisation, le serveur de messagerie transfère cet identifiant unique de personnalisation au serveur de personnalisation,
- ensuite, le serveur de personnalisation peut retrouver les éléments d'interface en fonction de l'identifiant unique de personnalisation et transmettre ces éléments d'interface au serveur de messagerie,
- le serveur de messagerie transmet alors les éléments d'interface avec le message donné précité à son ou ses destinataires.

Par ailleurs, l'étape a) peut comporter une opération de communication entre un terminal dont dispose le premier utilisateur et un serveur de personnalisation d'éléments d'interface, proposant un choix d'éléments d'interface parmi une pluralité d'éléments d'interface possibles, les éléments finalement choisis étant stockés éventuellement en correspondance d'au moins un identifiant (auprès du serveur de personnalisation avec un identifiant unique de personnalisation, et/ou auprès du terminal du premier utilisateur, éventuellement mais non nécessairement en correspondance d'un ou plusieurs identifiants de destinataires de futurs messages issus du premier utilisateur).

Le procédé selon l'invention trouve une application avantageuse mais non limitative à la messagerie instantanée.

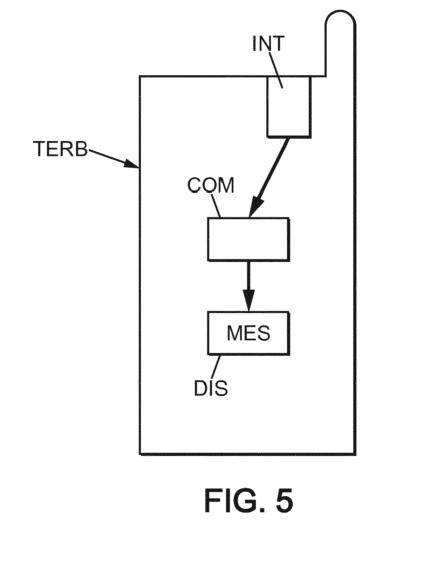

La présente invention vise aussi un terminal (typiquement le terminal récepteur sur lequel s'applique la personnalisation d'interface). Un tel terminal est agencé pour exécuter une application de messagerie, et comporte des moyens de gestion d'une interface homme machine de cette application de messagerie. En particulier, en référence à la figure 5, les moyens de gestion précités du terminal TERB comportent :
- une interface INT de réception d'éléments d'interface homme machine choisis par un utilisateur distant, et
- des moyens de commande COM, d'un affichage DIS d'un message MES reçu de cet utilisateur distant, avec les éléments d'interface précités.

La présente invention vise aussi un programme informatique comportant des instructions pour la mise en oeuvre du procédé ci-avant, lorsque ce programme est exécuté par un processeur. Le programme peut comporter des instructions stockées par le terminal récepteur en vue de leur exécution, mais aussi des instructions réparties entre le serveur de personnalisation d'interface et le terminal du premier utilisateur, notamment pour assurer leur interaction.

D'autres avantages et caractéristiques de l'invention apparaîtront à la lecture de la description détaillée ci-après, donnée à titre d'exemple non limitatif, et à l'examen des dessins sur lesquels :
- la figure 1 illustre un exemple de réalisation du procédé au sens de l'invention, dans un système apte à mettre en oeuvre le procédé, pour la réalisation en particulier d'une première étape de personnalisation par un utilisateur A d'une interface d'un terminal d'un utilisateur B,
- la figure 2 illustre un exemple de réalisation du procédé au sens de l'invention, dans le système précité, pour la réalisation en particulier d'une deuxième étape de transmission de message dont le contenu s'affiche avec la personnalisation précitée sur le terminal de l'utilisateur B,
- la figure 3 illustre un exemple de réalisation du procédé au sens de l'invention, dans le système précité, pour la réalisation en particulier d'une étape ultérieure de transmission d'un message dont le contenu s'affiche avec une personnalisation déjà enregistrée sur le terminal de l'utilisateur B,

- la figure 4 illustre un exemple de réalisation du procédé au sens de l'invention, dans le système précité, pour la réalisation en particulier d'une étape de transmission d'un message dont le contenu s'affiche avec une personnalisation non encore enregistrée sur le terminal d'un troisième utilisateur C, et
- la figure 5 illustre schématiquement des moyens d'un terminal récepteur TERB au sens de l'invention.

L'invention s'applique avantageusement mais non limitativement au cas des logiciels de messagerie. Dans le cadre d'un échange de messages, un utilisateur A peut souhaiter personnaliser l'interface du terminal d'un utilisateur B (l'entité B précitée) pour mieux projeter sa personnalité ou son humeur du moment sur l'utilisateur B. Cette personnalisation peut comprendre un changement de fond d'écran, une police de message spécifique, le changement de la disposition des commandes de l'écran, la mise en avant de certaines commandes pour faciliter des réponses spécifiques demandées.

La personnalisation permet de modifier tout ou partie de l'interface, et notamment de modifier une partie spécifique ou bien disséminer les modifications en diverses rubriques de l'interface.

La personnalisation peut être déclenchée par un individu, ou encore par le résultat d'un algorithme prenant en compte, par exemple, les propositions de personnalisation échangées à travers un système de messagerie, par l'ensemble des abonnés ou bien par un sous-ensemble spécifique à l'utilisateur B (personnalisations reçues de ses contacts, dernières personnalisations reçues, etc.). La personnalisation résultante peut être une combinaison de personnalisation déclenchée par un individu, pour une partie de l'interface, et par un algorithme, pour une autre partie. Une application directe de cette dernière possibilité permet alors à l'utilisateur B de connaître de façon dynamique les centres d'intérêt les plus partagés par les contacts avec lesquels il échange le plus de messages.

L'invention permet ainsi à un utilisateur A de « pousser » (c'est-à-dire d'envoyer en mode dit « push ») des éléments de personnalisation d'interface à ses contacts (par exemple un utilisateur B) dans le cadre des échanges de message qu'il a avec eux. Il enrichit ainsi la communication avec ses correspondants, exprime sa personnalité, ses centres d'intérêt du moment, en même temps qu'il communique le contenu de son message. L'utilisateur A est donc mieux identifié, auprès de l'utilisateur B, par des signes distinctifs qui traduisent son humeur du moment, ou, plus habituellement, sa « marque ». L'utilisateur peut ainsi s'associer à un groupe, à un individu ou à une marque commerciale qui représente le mieux son intérêt.

Les éléments de personnalisation d'interface, que l'utilisateur A choisit pour l'interface de l'utilisateur B, comprennent de façon non exhaustive :
- des fonds d'écran,
- des couleurs de rubriques de l'interface,
- des formes, ou des fontes de caractère, ou des présentations de caractères en « bulle » dans le cadre des conversations par échanges de messages électroniques,

- des images ou des vidéos disponibles dans la conversation (parmi les messages échangés) ou dans un emplacement spécifique de l'interface de l'utilisateur B (accessibles via la navigation dans un menu de l'interface, par exemple),
- des liens web pointant sur des contenus disponibles en ligne, dans les messages échangés ou, là encore, dans un emplacement spécifique de l'interface de l'utilisateur B,
- des modifications de l'apparence de l'interface de l'utilisateur B pour faciliter la nature de la réponse souhaitée, de l'action à entreprendre par l'utilisateur B, ou mettre en valeur des éléments de contenu marqués par l'utilisateur A comme faisant partie de la personnalisation,
- un élément d'interface de l'utilisateur B (bouton, rubrique ou autre) permettant à l'utilisateur B d'adopter instantanément la personnalisation que propose l'utilisateur A.

Ces éléments de personnalisation peuvent être regroupés (en langage JAVA par exemple) pour former un ensemble communiqué tel quel. Ces ensembles peuvent être créés par l'utilisateur A sur son terminal ou bien proposés par l'interface de son terminal. Avantageusement, un algorithme peut permettre de proposer des éléments de personnalisation correspondant le mieux aux centres d'intérêt de l'utilisateur A, identifiés au gré des thèmes de ses échanges de messages et/ou de ses choix de navigation sur le web par exemple.

A titre d'exemple non limitatif, il peut être proposé par exemple plusieurs onglets sur une interface du terminal de l'utilisateur A, lui permettant de choisir entre plusieurs éléments d'interface possibles pour un affichage de messages sur le terminal de l'utilisateur B, ce choix pouvant s'effectuer au gré de l'utilisateur A (selon son humeur du moment, ses centres d'intérêts actuels, etc.). Par exemple, les éléments d'interface peuvent comporter un habillage publicitaire spécifique (par exemple pour une équipe de sport ou un groupe de musiciens, pour une marque de vêtements, ou pour une marque quelconque).

L'invention permet alors à l'utilisateur B de recevoir ces personnalisations et d'adapter de façon dynamique son interface de messagerie pour traduire la personnalité ou les centres d'intérêts des personnes utilisant la messagerie en général et de son cercle de contacts en particulier. Elle permet à l'utilisateur B d'identifier facilement son interlocuteur, de l'associer à un groupe d'individus, une personnalité, un artiste, une marque commerciale, un hobby, et plus généralement à son centre d'intérêt du moment. Elle peut permettre à l'utilisateur B notamment de connaître les centres d'intérêt du moment les plus partagés par ses amis proches ou par les abonnés qui sont dans la même zone géographique que lui, du même âge que lui, de la même école, etc.

En référence maintenant aux figures, dans le cadre d'un service de messagerie instantanée sur téléphone mobile cité ici à titre d'exemple, l'utilisateur A dispose d'un terminal TERA (par exemple un terminal de téléphonie mobile, de type smartphone par exemple, ou encore une tablette, ou un ordinateur, etc.) connecté à un réseau de télécommunication et programmé pour exécuter une interface homme machine IHMA dans le cadre d'une application de messagerie instantanée (ou « chat »). De la même manière, l'utilisateur B dispose d'un terminal TERB, connecté et programmé pour exécuter une interface homme machine IHMB dans le cadre de l'application précitée de messagerie instantanée. La communication entre les terminaux TERA et TERB est assurée par le serveur de messagerie SERM (doubles flèches en traits pointillés de la figure 1), via le réseau de télécommunication précité (non représenté).

Au préalable, la première étape du procédé consiste en ce que l'utilisateur A choisit initialement la personnalisation d'interface IHMB qu'il veut « pousser » pour l'utilisateur B.

A cet effet, dans une réalisation particulière, l'interface IHMA du terminal TERA de l'utilisateur A propose à l'utilisateur A de personnaliser l'interface des terminaux de personnes à qui de futurs messages de l'utilisateur A sont destinés, ou encore de modifier cette interface si l'utilisateur A a déjà adopté une personnalisation précédemment.

Si l'utilisateur A confirme, via une application de messagerie qui s'exécute sur son terminal TERA, son souhait de personnaliser les interfaces de ses destinataires de messages, le programme de messagerie installé sur le terminal TERA s'exécute en provoquant une interrogation, par le terminal TERA, d'un serveur de personnalisation SERP capable de proposer des personnalisations d'interface (flèche S1-REQ de la figure 1). Ce serveur de personnalisation peut être une même entité que le serveur de messagerie SERM ou une entité distincte.

Suite à cette requête S1-REQ qu'envoie le terminal TERA au serveur SERM, le serveur SERM répond (flèche S2-REP de la figure 1) en transmettant au terminal TERA des propositions de personnalisation (par exemple en envoyant des textes avec des couleurs et des fontes de caractères différentes et sur fonds de couleur différents) de sorte que l'utilisateur A peut choisir ensuite une forme proposée d'interface ou une combinaison de formes proposées.

Ainsi, l'utilisateur A peut choisir une personnalisation parmi un ensemble de personnalisations prédéterminées, ou en élaborer une lui-même, par exemple par combinaison de caractéristiques d'interfaces prédéterminées. Un identifiant unique (appelé IUP ci-après, pour « Identifiant Unique de Personnalisation ») associe alors bijectivement le résultat de la personnalisation et la forme de l'interface qui s'installe ultérieurement sur les terminaux des utilisateurs destinataires des messages de l'utilisateur A. Cet identifiant IUP est :
- défini par le serveur SERP, si l'utilisateur A adopte une personnalisation prédéterminée,
- ou défini par l'application de messagerie qui s'exécute sur le terminal TERA si l'utilisateur A élabore sa propre personnalisation.

A l'étape suivante, en référence maintenant à la figure 2, dans un exemple de réalisation, l'utilisateur A envoie un message MES à l'utilisateur B, ce message étant associé à la personnalisation choisie.

A cet effet, l'application de messagerie met à jour la base des contacts BCA de l'utilisateur A sur son terminal TERA (flèche S3-MAJ(IUP) de la figure 2), avec l'identifiant IUP comme définissant les formes d'interfaces des terminaux des contacts de l'utilisateur A dans l'application de messagerie.

Ensuite, lors de l'envoi du premier message après personnalisation (flèche S4-MES+PERS de la figure 2), la trame du message contient les éléments de personnalisation associés, dans un segment de données (ou « compartiment ») identifié pour ne pas être confondu avec le contenu du message lui-même. L'identifiant IUP est aussi communiqué dans la trame du message. Les éléments de personnalisation et l'identifiant IUP peuvent, en variante, être envoyés dans un message de service spécifique, lequel est transmis en parallèle du message MES.

Le serveur de routage de messagerie SERM peut alors :
- transférer le message (avec les informations de personnalisation), tel quel, au terminal TERB de l'utilisateur B, ou
- extraire les informations de personnalisation et les envoyer au serveur de personnalisation SERP (flèche S5-PERS de la figure 2).

Le serveur de personnalisation SERP peut ensuite stocker ces informations de personnalisation en fonction de l'identifiant IUP que lui communique le serveur de routage de messagerie SERM (flèche S6-IUP de la figure 2). Ainsi, pour de prochaines mises en oeuvre du service de messagerie faisant intervenir l'utilisateur A, éventuellement avec d'autres destinataires que l'utilisateur B, le terminal de l'utilisateur A n'a besoin de transmettre que l'identifiant IUP. Le serveur de personnalisation SERP, en fonction de l'identifiant IUP, retrouve les éléments d'interface personnalisés choisis par l'utilisateur A, pour transmettre ces caractéristiques aux destinataires de messages de l'utilisateur A, comme on le verra plus loin dans le mode de réalisation illustré sur la figure 4.

En référence à nouveau à la figure 2, le serveur SERM transmet au terminal de l'utilisateur B le message qu'il reçoit de l'utilisateur A (flèche S7-MES+PERS de la figure 2). Ainsi, lorsque le terminal TERB de l'utilisateur B reçoit du serveur SERM le message de l'utilisateur A, il affiche le contenu du message pour l'utilisateur B, et stocke dans sa base de données des contacts BCB les informations de personnalisation envoyées par le terminal de l'utilisateur A (flèche S8-MAJ de la figure 2), en correspondance des coordonnées de contact de l'utilisateur A et éventuellement de l'identifiant IUP. Auparavant, l'utilisateur B peut choisir ou non de laisser l'utilisateur A personnaliser son interface pendant la communication avec l'utilisateur A. Si l'utilisateur B a accepté les personnalisations de l'utilisateur A, la base de contact locale BCB de l'application de messagerie de l'utilisateur B est mise à jour, en particulier pour associer à l'utilisateur A ses contenus de personnalisation et éventuellement l'identifiant IUP, les contenus de personnalisation étant stockés sur le téléphone de l'utilisateur B.

Il peut être avantageux de stocker sur le terminal B les éléments de personnalisation en fonction d'un identifiant IUP, quand bien même ils sont associés à un même utilisateur A. En effet, selon une humeur en cours ou une horodate de message courant, l'utilisateur A peut préférer un affichage de son message avec une forme d'interface différente (par exemple une interface fantaisiste pour des messages reçus à partir de 20h et les weekends et une interface plus classique pendant des horaires de bureau). Ainsi, on comprendra qu'il peut être associé plusieurs identifiants IUP à un même utilisateur A.

En référence à nouveau à la figure 2, lorsque l'utilisateur A reçoit l'accusé de réception du message envoyé à l'utilisateur B, il peut confirmer la mise à jour de sa propre base de données de contacts BCA pour indiquer que l'utilisateur B a bien reçu la personnalisation en cours (flèche S3-MAJ(IUP) de la figure 2). Ainsi, l'utilisateur A n'a plus à envoyer à l'utilisateur B le contenu de personnalisation avec ses messages tant que sa personnalisation reste inchangée.

En référence maintenant à la figure 3, l'utilisateur A envoie un nouveau message à l'utilisateur B, sans modification des données de personnalisation. En particulier ici, l'utilisateur A envoie à nouveau un message à l'utilisateur B sans avoir changé sa personnalisation. L'application de messagerie qui s'exécute sur le terminal TERA de l'utilisateur A interroge alors la base de contacts BCA (flèche S9-PERS (B) de la figure 3) et obtient l'information que la personnalisation en cours a déjà été communiquée à l'utilisateur B. Ainsi, le terminal TERA n'envoie pas l'information de personnalisation avec le contenu du message envoyé au serveur SERM (flèche S10-MES de la figure 3). Le serveur de messagerie SERM transmet le message (flèche S11-MES de la figure 3) au terminal TERB. Ce dernier, sur réception de ce message, interroge sa base de contacts BCB (flèche S12-PERS(A) de la figure 3) et détermine ainsi que les messages provenant de l'utilisateur A donnent lieu à une personnalisation enregistrée dans le terminal TERB (flèche S13-PERS de la figure 3). Le terminal TERB modifie en conséquence l'interface homme machine de l'application de messagerie.

Dans le contexte de la figure 4, l'utilisateur A envoie pour la première fois un message à un utilisateur C depuis la dernière personnalisation effectuée par l'utilisateur A. En particulier, si l'utilisateur A envoie à un autre utilisateur C un message alors que sa personnalisation n'a pas été transmise à l'utilisateur C préalablement, le mode de réalisation représenté sur la figure 2 peut être mis en oeuvre. Toutefois, pour éviter d'avoir à transmettre des éléments d'interface qui peuvent être lourds (images, vidéos, etc.), il est préférable de faire intervenir le serveur de personnalisation SERP. En effet, si l'utilisateur A envoie un message à l'utilisateur C et que ce message n'est pas le premier message envoyé depuis la personnalisation en cours de l'utilisateur A, le terminal TERA envoie le message (flèche S15-MES+IUP de la figure 4), sans élément de personnalisation, mais avec l'identifiant IUP issu de la base des contacts BCA (flèche S14-IUP de la figure 4) dans laquelle il était stocké préalablement (flèche S3-MAJ(IUP) de la figure 2). Le serveur de routage de messagerie détecte l'identifiant IUP et émet une requête vers le serveur de personnalisation SERP (flèche S16-REQ(IUP) de la figure 4) pour récupérer les éléments de personnalisation correspondants (flèche S17-PERS(A) de la figure 4). Le serveur de messagerie SERM agrège les éléments de personnalisation ainsi récupérés avec le message envoyé au terminal TERC de l'utilisateur C (flèche S18-MES+PERS de la figure 4). L'interface IHMC du terminal TERC affiche alors le message selon la personnalisation de l'utilisateur A. Ce dernier peut décider ensuite d'accepter de stocker les éléments de personnalisation de l'utilisateur A dans la base de contacts BCC de son terminal TERC, afin de mettre en oeuvre une telle personnalisation pour les sessions de messagerie suivantes avec l'utilisateur A (flèche S19-PERS(A)), comme décrit ci-avant en référence à la figure 2.

Ainsi, de façon générale, le terminal de l'utilisateur B (ou de l'utilisateur C dans l'exemple de réalisation de la figure 4) contient dans sa base de données locale des informations de personnalisation de ses contacts. Elles sont mises à jour de façon dynamique dès que l'émetteur envoie un message à l'utilisateur B après avoir modifié sa personnalisation. Cette base de données locale est donc un bon échantillon des centres d'intérêt du moment dans le réseau de contacts de l'utilisateur B. Une page spécifique de l'interface homme machine peut présenter ces données de façon agrégée. Un algorithme adapté peut filtrer ces informations locales et les présenter dans un ordre illustrant au mieux pour l'utilisateur B les centres d'intérêt de son réseau de contacts. Cet algorithme peut être établi en fonction par exemple d'informations statistiques sur les personnalisations adoptées par le réseau de contacts de l'utilisateur B, le nombre de messages échangés avec chacun de ces contacts, leur horodatage, la localisation géographique de l'utilisateur B, ou encore des données de profil recueillies auprès de l'utilisateur B lui-même. L'utilisateur B ainsi au coeur des centres d'intérêt de ses relations. On comprendra ainsi que l'invention permet alors de mesurer une « viralité » (c'est-à-dire une vitesse de propagation) de certains centres d'intérêts sociaux.

Bien entendu, la présente invention ne se limite pas à la forme de réalisation décrite ci-avant à titre d'exemple, elle s'étend à d'autres variantes.

Par exemple, l'application de l'invention peut être étendue à tous types de terminaux au-delà des seuls terminaux mobiles.

L'invention peut aussi s'implémenter dans le cas où l'interface homme machine n'est pas résidente sur une application locale mais sur un serveur centralisé de type Internet avec des interfaces web pour les utilisateurs et une base de données centrale remplaçant les bases de contact de chaque utilisateur.

Par ailleurs, l'identifiant unique de personnalisation précité, bien qu'avantageux, n'est qu'optionnel. En effet, dans une réalisation possible, en fonction d'un identifiant d'émetteur (une coordonnée de contact du terminal de l'utilisateur A par exemple), habituellement indiqué dans une trame du message, le serveur de messagerie SERM peut être apte à transmettre les éléments d'interface (qu'il a préalablement stockés) à tout terminal destinataire du message. Toutefois, une telle réalisation consomme des ressources de communication sur un réseau.

## Revendications

1. Procédé de gestion d'une interface homme machine d'une application de messagerie auprès d'un terminal récepteur d'un message issu d'un premier utilisateur (A), le procédé comportant les étapes :
a) Sélection par le premier utilisateur d'éléments d'interface homme machine (S1, S2),
b) Transmission (S4, S10, S15) à destination du terminal récepteur (TERB) d'au moins une information relative aux éléments d'interface sélectionnés, et
c) Sur réception (S7, S11, S18) d'un message issu du premier utilisateur auprès du terminal récepteur, affichage du message avec lesdits éléments d'interface.

2. Procédé selon la revendication 1, dans lequel une première mise en oeuvre de l'étape b) comporte :
b1) une opération de transmission des éléments d'interface (S4), pour un stockage desdits éléments d'interface (S5 ; S8) en correspondance d'au moins un identifiant.

3. Procédé selon la revendication 2, dans lequel les éléments d'interface transmis à l'opération b1) sont reçus par le terminal récepteur (S7) avec un message issu du premier utilisateur et les éléments d'interface sont stockés auprès du terminal récepteur (S8) en correspondance d'au moins un identifiant du premier utilisateur que comporte ledit message.

4. Procédé selon la revendication 3, dans lequel l'identifiant du premier utilisateur est un identifiant d'une base de données de contact (BCB), que stocke le terminal récepteur (TERB).

5. Procédé selon l'une des revendications 3 et 4, dans lequel, sur réception de messages ultérieurs comportant l'identifiant du premier utilisateur, après l'opération b1), le terminal récepteur récupère les éléments d'interface stockés (S13) en fonction de l'identifiant du premier utilisateur que comportent les messages ultérieurs, et affiche lesdits messages ultérieurs avec lesdits éléments d'interface.

6. Procédé selon l'une des revendications 3 à 5, dans lequel, le premier utilisateur disposant d'un terminal, les éléments d'interface sont stockés en outre auprès du terminal du premier utilisateur en correspondance d'au moins un identifiant d'utilisateur du terminal récepteur (S3), et, pour des messages ultérieurs destinés au terminal récepteur, le terminal du premier utilisateur transmet lesdits messages (S10) sans élément d'interface, ni identifiant correspondant.

7. Procédé selon l'une des revendications 2 à 6, dans lequel les éléments d'interface, transmis à l'opération b1), sont stockés (S5, S6) auprès d'un serveur (SERP) en correspondance d'au moins un identifiant.

8. Procédé selon la revendication 7, dans lequel ledit serveur est un serveur de personnalisation d'éléments d'interface (SERP) et l'identifiant est un identifiant unique de personnalisation (IUP).

9. Procédé selon la revendication 8, dans lequel, un serveur de messagerie étant prévu pour relayer des messages entre le premier utilisateur et un ou plusieurs destinataires desdits messages :
- sur réception d'un message donné, issu du premier utilisateur avec un identifiant unique de personnalisation (IUP), le serveur de messagerie (SERM) transfère ledit identifiant unique de personnalisation (IUP) au serveur de personnalisation (S16),
- le serveur de personnalisation retrouve les éléments d'interface en fonction de l'identifiant unique de personnalisation et transmet (S17) les éléments d'interface au serveur de messagerie (SERM),
- le serveur de messagerie (SERM) transmet les éléments d'interface avec ledit message donné audit un ou plusieurs destinataires (S18).

10. Procédé selon l'une des revendications précédentes, dans lequel, le premier utilisateur disposant d'un terminal, l'étape a) comporte une communication (S1, S2) entre le terminal du premier utilisateur et un serveur de personnalisation d'éléments d'interface, le serveur de personnalisation étant apte à proposer un choix d'éléments d'interface parmi une pluralité d'éléments, les éléments d'interface choisis étant stockés.

11. Procédé selon la revendication 10, prise en combinaison avec la revendication 8, dans lequel le serveur de personnalisation stocke les éléments choisis en correspondance d'au moins un identifiant unique de personnalisation (S5).

12. Procédé selon l'une des revendications précédentes, dans lequel les éléments d'interface comportent au moins un élément parmi :
- une couleur d'affichage de caractères du message,
- une fonte d'affichage de caractères du message,
- une couleur de fond d'affichage du message,
- un ou plusieurs contenus multimédias,
- un ou plusieurs contenus multimédias propres au premier utilisateur.

13. Procédé selon l'une des revendications précédentes, dans lequel l'application de messagerie est une application de messagerie instantanée.

14. Terminal, agencé pour exécuter une application de messagerie, et comportant des moyens de gestion d'une interface homme machine de ladite application de messagerie, lesdits moyens comportant :
- une interface de réception d'éléments d'interface homme machine choisis par un utilisateur distant, et
- des moyens de commande d'affichage d'un message reçu de l'utilisateur distant, avec lesdits éléments d'interface.

15. Programme informatique comportant des instructions pour la mise en oeuvre du procédé selon l'une des revendications 1 à 13, lorsque ce programme est exécuté par un processeur.
